# EUROPÄISCHE PATENTSCHRIFT

(11) **EP 0 783 385 B1**
(45) Veröffentlichungstag und Bekanntmachung des Hinweises auf die Patenterteilung: **21.10.1998**
(21) Anmeldenummer: 95931146.5
(22) Anmeldetag: 11.09.1995
(51) Int. Cl.: B21D 43/28, B23D 47/04

(54) **VERFAHREN UND VORRICHTUNG FÜR DIE GENAULÄNGENFERTIGUNG VON LANGGESTRECKTEM, STABFÖRMIGEM GUT**
METHOD AND DEVICE FOR CUTTING ELONGATE, ROD-SHAPED MATERIAL TO A PRECISE LENGTH
PROCEDE ET DISPOSITIF SERVANT A COUPER A UNE LONGUEUR PRECISE UN MATERIAU ALLONGE, EN FORME DE BARRE

(30) Priorität: 26.09.1994 DE 4435026
(43) Veröffentlichungstag der Anmeldung: 16.07.1997
(73) Patentinhaber: MANNESMANN Aktiengesellschaft, 40213 Düsseldorf (DE)
(72) Erfinder: PIETERS, Rolf, D-45473 Mülheim (DE)
(74) Vertreter: Presting, Hans-Joachim, Dipl.-Ing.
(86) Internationale Anmeldenummer: DE9501276
(87) Internationale Veröffentlichungsnummer: WO9609905

(56) Entgegenhaltungen:
- DE-C- 3 920 173
- US-A- 3 841 462

## Beschreibung

Die Erfindung betrifft ein Verfahren und eine Vorrichtung für die Genaulängenfertigung von langgestrecktem, stabförmigem Gut gemäß dem Gattungsbegriff des Anspruches 1 bzw. des Anspruches 5.

Eine gattungsmäßige Vorrichtung ist in der DE-A-39 20 173 offenbart. Diese weist ein in einen Rollgang einer Teilanlage einschwenkbares Anschlagelement mit einer Anschlagplatte auf, die mit einem auf dem Anschlagelement angeordneten Stoßdämpfer als Dämpfungselement verbunden ist. Das Anschlagelement ist gelenkig mit einem in Längsrichtung des Rollganges und parallel neben dem Rollgang verfahrbaren Wagen verbunden. Die Grobeinstellung bezüglich des gewünschten Abstandes zur Trennvorrichtung erfolgt mittels einer parallel zum Rollgang liegenden Zahnstange, in die ein am Wagen angeordnetes und gelagertes Ritzel eingreift. Das Ritzel wird beispielsweise über einen Stellmotor angetrieben, so daß der Wagen mittels Räder entlang der Schiene vor- und zurückverschoben werden kann. Zur Arretierung des Wagens werden zwei darauf angeordnete, hydraulisch verfahrbare Kolben in konische Bohrungen getrieben, die auf dem darunterliegenden Tragrahmen angebracht sind.

Nachteilig bei dieser Vorrichtung ist der konstruktive und kostenmäßig sich niederschlagende Aufwand für die Arretierung des Wagens. Außerdem bereitet es Probleme, daß lageweise zugeführtes Gut bündig an der Anschlagplatte zur Anlage kommt.

Eine weitere gattungsmäßige Vorrichtung ist aus der US-A-3,841,462 bekannt. Diese weist eine Teilanlage mit einer Säge und einem dazugehörigen Rollgang auf, um das langestreckte, stabförmige Gut der Säge zuzuführen. Ein parallel zum Rollgang verfahrbarer Anschlag weist eine in den Rollgang ein- und ausschwenkbare Anschlagplatte auf, die mit Stoßdämpfern zur Dämpfung des auf die Anschlagplatte auftreffenden Gutes versehen ist. Die genaue Positionierung des Anschlages erfolgt über eine am Anschlag befestigte Fernsehkamera, die auf eine unterhalb des Rollganges angeordnete Meßskala gerichtet ist. Der Antriebsmotor für den Anschlag kann elektrisch oder hydraulisch sein und ist mit einer Regelung zur stufenlosen Einstellung der Geschwindigkeit ausgestattet.

Bei dieser Anlage ist ebenfalls von Nachteil, daß es Probleme bereitet, das lageweise zugeführte Gut bündig an der Anschlagplatte zur Anlage zu bringen.

Aufgabe der Erfindung ist es, ein Verfahren und eine Vorrichtung für die Genaulängenfertigung von langgestrecktem, stabförmigem Gut anzugeben, mit dem unabhängig von der Aufprallenergie eine genaue Teilungspositionierung möglich ist und dessen Vorrichtung kostengünstig herstellbar ist. Eine weitergehende Aufgabe besteht darin, daß lageweise zugeführtes Gut bündig an der Anschlagplatte zur Anlage kommt.

Diese Aufgabe wird mit den Merkmalen des Anspruches 1 bzw. Anspruches 5 gelöst. Vorteilhafte Weiterbildungen sind Bestandteil von Unteransprüchen.

Das vorgeschlagene Verfahren unterscheidet sich vom bekannten Stand der Technik dadurch, daß keine Arretierung des verfahrbaren Wagens vorgesehen ist und der Anschlag zusammen mit dem verfahrbaren Wagen zur Dämpfung eingesetzt wird. In der praktischen Durchführung bedeutet dies, daß das einzelne oder das lageweise zugeführte Gut auf die Anschlagplatte prallt und durch die Aufprallenergie, die teilweise durch ein mit der Anschlagplatte verbundenes Dämpfungselement vernichtet wird, der Wagen in Bewegung gesetzt wird. Diese Bewegung hält solange an, bis die Restenergie des Aufpralls vernichtet ist. Vernichten heißt hier in Reibungswärme umzusetzen. Dazu wird auch der elektrische Antriebsmotor eingesetzt, der durch die Bewegung des Wagens angetrieben wird. Das Drehmoment des Antriebsmotors ist veränderbar, so daß der Anschlag härter oder weicher ausfällt.

Falls ein extrem weicher Anschlag für bestimmte empfindliche Erzeugnisse gewünscht wird, kann der Wagen vor dem Aufprall des Gutes in Bewegung gesetzt werden, und zwar in Transportrichtung, wobei die Geschwindigkeit des Wagens immer geringer ist als die Transportgeschwindigkeit des Gutes. Der Stoß erfolgt dann nur noch mit der Differenzgeschwindigkeit zwischen Transportgeschwindigkeit und Verfahrgeschwindigkeit.

Nach Vernichtung der Aufprallenergie und Stillstand des Wagens wird dieser im Regelfall entgegen der Transportrichtung solange verfahren, bis die gewünschte Teilungsposition erreicht ist. In Sonderfällen kann es auch vorkommen, daß der Wagen in Transportrichtung bis zur Teilungsposition verfahren wird. Zur Erkennung der Teilungsposition in bezug auf den Verfahrweg des Wagens sind an der Zahnstange Meßfühler und ein Winkelschnittgeber am Antriebsmotor angeordnet, die dem Bedienungsmann genau anzeigen, in welchem Abstand sich der Wagen bzw. die Anschlagplatte von der Trennvorrichtung befindet.

Im Hinblick auf eine Bündigkeit des auf die Anschlagplatte lageweise zugeführten Gutes wird weiterbildend vorgeschlagen, daß das Verfahren des Wagens in die Teilungsposition bei laufendem Rollgang erfolgt. Dadurch werden kleine Relativbewegungen zwischen den einzelnen Stücken der Lage erzeugt, so daß schon nach kurzem Verfahrweg die gewünschte Bündigkeit erreicht wird. Beim bekannten Stand der Technik hatte man mit mäßigem Erfolg dies dadurch zu erreichen versucht, daß man bei einem arretierten Wagen die gesamte Lage mehrfach gegen die Anschlagplatte aufprallen ließ.

Das vorgeschlagene Verfahren zur Erzielung einer Bündigkeit lageweise zugeführter Stücke wird unterstützt, wenn in den Transport des Gutes gezielte Unruhe hineingebracht wird. Dies wird in der Weise erreicht, daß die einzelnen Rollen des Rollganges aus gewalztem Rohr hergestellt und außen nicht überdreht werden. Auf diese Weise weist jede Rolle eine bestimmte Unrundheit auf, die die gewünschte Unruhe beim Transport des Gutes erzeugt. Auch dies ist eine Maßnahme im Hinblick auf die Erzeugung kleiner Relativbewegungen zwischen den Einzelstücken im Hinblick auf die gewünschte Bündigkeit.

Der Vorteil der erfindungsgemäßen Vorrichtung ist darin zu sehen, daß durch den Wegfall der Klemmung des Wagens und der der dazugehörigen Hydraulik die Gesamtkonstruktion einfacher und damit kostengünstiger wird. Durch die Einbeziehung der gesamten Anschlagvorrichtung in die Dämpfung des Aufpralls werden die Bremskräfte verkleinert, die es erlauben, auch mit kleineren Fundamenten für das Verfahren des Wagens auszukommen. Die geforderte Teilungsgenauigkeit wird unabhängig von der Aufprallenergie reproduzierbar erreicht, ebenso die gewünschte Bündigkeit bei der Teilung lageweise zugeführter Stücke.

In der Zeichnung wird anhand eines Ausführungsbeispieles das erfindungsgemäße Verfahren näher erläutert.

Es zeigen:
- Figur 1: eine Längsansicht eines Ausführungsbeispiels der erfindungsgemäßen Vorrichtung einschließlich Schienenweg und Rollgang
- Figur 2: eine Draufsicht in Richtung X in Fig. 1
- Figur 3: einen Schnitt entlang der Linie A-B in Fig. 2
- Figur 4: wie Fig. 2 in einem vergrößerten Maßstab hier ohne Schienenweg und Rollgang

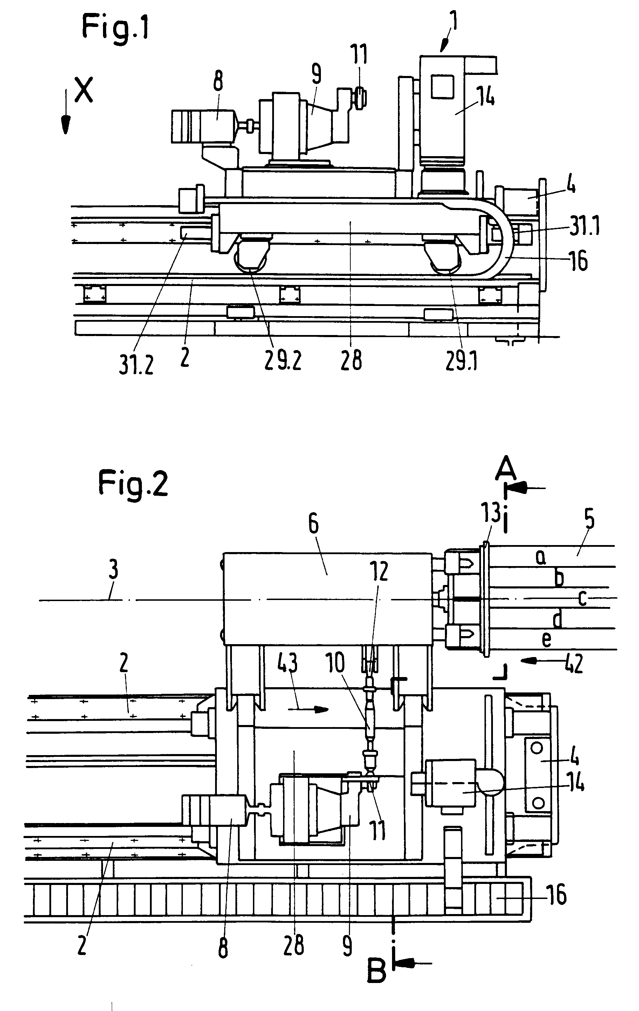

In Figur 1 ist in einer Längsansicht und in Figur 2 in einer Draufsicht in Richtung X in Figur 1 die erfindungsgemäße Vorrichtung 1 einschließlich des Schienenweges 2 und des Rollganges 3 dargestellt, wobei vom Rollgang 3 für das abzulängende Gut 5 nur die Mittellinie angegeben ist. In diesem Ausführungsbeispiel liegt die Sägeanlage rechts von der Vorrichtung 1 und diese befindet sich gerade am Endanschlag 4 des Schienenweges 2, d. h. in einer Stellung der kürzesten zu schneidenden Länge für das stabförmige Gut 5. Beispielsweise soll hier eine Lage gleicher Stäbe mit insgesamt fünf Stücken (a-e) geschnitten werden. Auf die Problematik des zurückhängenden Stückes b wird später noch eingegangen.

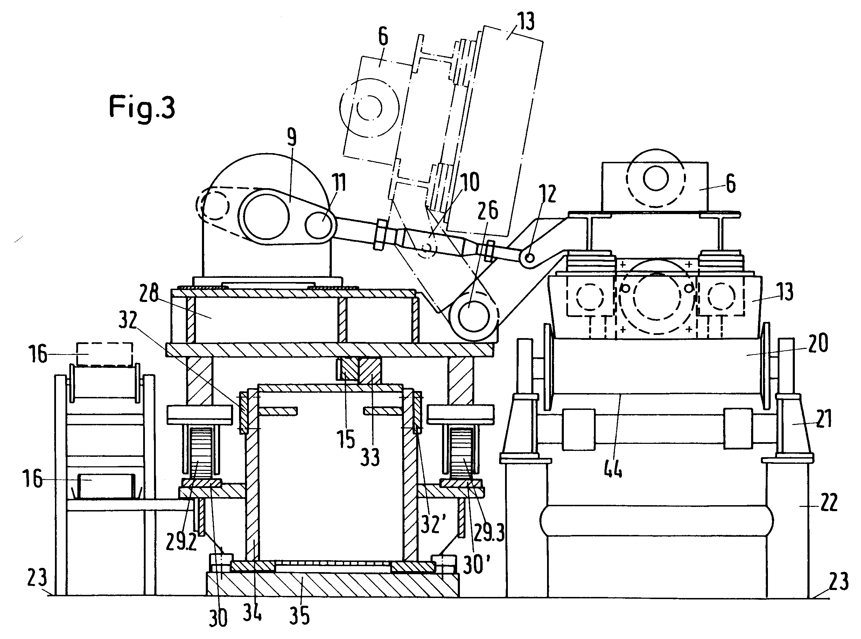

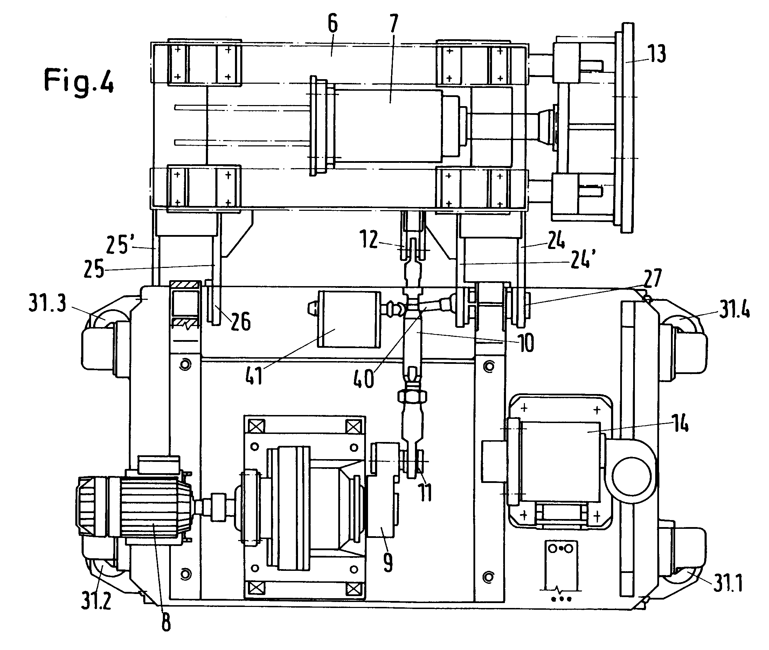

Die Vorrichtung 1 selbst weist als wesentliche Elemente auf, das in den Rollgang 3 einschwenkbare Anschlagelement 6 mit dem darauf befestigten Stoßdämpfer 7 (siehe Figur 4) und der Anschlagplatte 13, den Motor zum Einschwenken 8 einschließlich des Exzenters 9 mit der Verbindungsstange 10, die über ein Doppelgelenk 11,12 den Exzenter 9 mit dem Anschlagelement 6 verbindet. In senkrechter Lage ist auf dem Rahmen ein Elektromotor 14 angeordnet, der das Ritzel 15 (siehe Figur 3) für das Verfahren der Vorrichtung 1 antreibt. Die Energiezufuhr für die Motoren 8,14 erfolgt über ein Schleppkabel 16.

In Figur 3 ist ein Schnitt entlang der Linie A-B in Figur 2 dargestellt. Der Rollgang 3, hier symbolisiert durch eine Transportrolle 20 ist auf einer Tragkonstruktion 21 gelagert, die sich über ein Rahmengestell 22 auf dem Fundament 23 abstützt. Das Anschlagelement 6 ist einmal in der eingeschwenkten Position dargestellt (ausgezogenen Linien) und einmal in der ausgeklappten Position (gestrichelte Linien). Für das Verschwenken sind vier Stegbleche 24,24',25,25'am Anschlagelement 6 angeschweißt und gelenkig 26,27 mit der Rahmenkonstruktion des Wagens 28 verbunden. Die untere Abstützung des Wagens 28 erfolgt über insgesamt vier Räder 29.1,29.2,29.3,29.4, die auf Schienenplatten 30,30'abrollen. Die seitliche Abstützung erfolgt ebenfalls über vier Räder 31.1,31.2,31.3,31.4, die auf hochkantstehenden Schienenplatten 32,32'abrollen. Die Zahnstange 33 ist auf einem Tragrahmen 34 befestigt, der sich über eine Ankerplatte 35 auf dem Fundament 23 abstützt.

Figur 4 zeigt in einem vergrößerten Maßstab ohne Schienenweg 2 und ohne Rollgang 3 eine Draufsicht der Vorrichtung 1, die ansonsten gleich ist mit der Darstellung in Figur 2. Um den Schwenkgrad des Anschlagelementes 6 feststellen zu können, ist am freien Ende des rechts liegenden Gelenkes 27 ein über ein Kardangelenk 40 verbundenes Kopierwerk 41 angeordnet. Die übrigen Elemente sind bereits ausführlich in Figur 2 erläutert worden.

Die Problematik der Bündigkeit eines lageweise zugeführten Gutes 5 ist am besten gemäß der Darstellung Figur 2 zu erklären. Unter der Annahme, daß das Gut 5 bereits auf die Anschlagplatte 13 aufgeprallt und der Wagen 28 zum Stillstand gekommen ist, wird erfindungsgemäß der Wagen 28 entgegen der Transportrichtung 42 in die Teilungsposition gefahren. Die Verfahrrichtung des Wagens 28 ist mit einem Pfeil 43 gekennzeichnet. Dieses Verfahren des Wagens 28 erfolgt bei laufendem Rollgang 3, wobei die einzelnen Rollen 20 (Fig. 3) versuchen, das Gut 5 in Transportrichtung 42 zu bewegen. Bei diesem Gegeneinander von Bewegung des Gutes 5 in Transportrichtung 42 und Verfahren des Wagens 28 in die Teilungsposition, entstehen zwischen den Stücken a - e Relativbewegungen, die dazu führen, daß das ursprünglich nicht bündig liegende Stück b innerhalb eines kurzen Verfahrweges bündig an der Anschlagplatte 13 zur Anlage kommt. Die gewünschte Relativbewegung zwischen den Stücken a - e kann noch unterstützt werden, wenn man die einzelnen Rollen 20 des Rollganges aus einem gewalzten Rohr herstellt und die Mantelfläche 44 nicht überdreht. Dies hat zur Folge, daß die vom Walzprozeß herrührende gewisse Exzentrizität des Rohres bei mittiger Aufnahme erhalten bleibt. Da der Grad der Exzentrizität und die momentane Lage von Rolle zu Rolle verschieden ist, wird über die Unrundheiten eine Unruhe beim Transport des Gutes 5 erzeugt, die zu den kleinen gewünschten Relativbewegungen zwischen den Stücken a bis e führt.

## Patentansprüche

1. Verfahren zur Positionierung von langgestrecktem, stabförmigem Gut (5) für die Genaulängenfertigung, bei dem einzeln oder lagenweise das Gut (5) über einen Rollgang (3) einer Teilanlage zugeführt und gegen einen in den Rollgang (3) einschwenkbaren und in Längsrichtung des Rollganges (3) verfahrbaren Anschlag (6) gefahren und durch ein mit dem Anschlag (6) verbundenes Dämpfungselement (7) die Aufprallenergie in Reibungswärme umgewandelt und nach Fixierung der Teilungsposition eine vorgegebene Länge des Gutes (5) abgetrennt wird,
dadurch gekennzeichnet,
daß die Verfahrbarkeit des Anschlages (6) einschließlich des damit verbundenen Dämpfungselementes (7) für den Abbau der kinetischen Aufprallenergie genutzt und nach vollständiger Umwandlung der Aufprallenergie in Reibungswärme der Anschlag (6) zum Stillstand kommt und die Teilungsposition durch ein gezieltes Verfahren des Anschlages (6) eingestellt wird.

2. Verfahren nach Anspruch 1,
dadurch gekennzeichnet,
daß der Anschlag (6) vor dem Aufprall des Gutes (5) in Transportrichtung (42) des Gutes (5) in Bewegung gesetzt wird, wobei die Verfahrgeschwindigkeit geringer ist als die Transportgeschwindigkeit des Gutes (5).

3. Verfahren nach den Ansprüchen 1 und 2,
dadurch gekennzeichnet,
daß nach dem Aufprall des Gutes (5) und bei Abbau der kinetischen Aufprallenergie der Anschlag (6) gegen die oder in Transportrichtung (42) bei laufendem Rollgang (3) verfahren wird.

4. Verfahren nach den Ansprüchen 1 bis 3,
dadurch gekennzeichnet,
daß zur Erzielung einer Bündigkeit des lageweise auf den Anschlag (6) zugeführten Gutes (5) kleine Relativbewegungen zwischen den einzelnen Stücken (a - e) erzeugt werden.

5. Vorrichtung (1) zur Positionierung von langgestrecktem, stabförmigem Gut (5) für die Genaulängenfertigung, bestehend aus einem in den Rollgang (3) einer Teilanlage einschwenkbaren Anschlag (6) mit einer Anschlagplatte (13), die mit einem Dämpfungselement (7) versehen und mit neben dem Rollgang (3) parallel mittels eines elektrischen Motors (14) verfahrbaren Wagen (28) gelenkig verbunden ist,
dadurch gekennzeichnet,
daß für den verfahrbaren Wagen (28) keine Arretierung vorgesehen ist, und daß das Drehmoment des Motors (14) veränderbar ist.

6. Vorrichtung nach Anspruch 5,
dadurch gekennzeichnet,
daß das als Stoßdämpfer (7) ausgebildete Dämpfungselement mit einem Blasenspeicher zusammenwirkt.

7. Vorrichtung nach den Ansprüchen 5 und 6,
dadurch gekennzeichnet,
daß die Rollen (20) des Rollganges (3) eine bestimmte Unrundheit aufweisen.

## Claims

1. A method for positioning elongate, bar-shaped stock (5) for production of exact lengths, in which individually or in layers the stock (5) is supplied via a roller table (3) to a dividing installation and is moved against a stop (6) which can be pivoted into the roller table (3) and can be moved in the longitudinal direction of the roller table (3) and the impact energy is converted into frictional heat by means of a damping element (7) connected to the stop (6) and once the dividing position has been set a predetermined length of the stock (5) is severed,
characterised in that
the movability of the stop (6) including the damping element (7) connected thereto is utilised for reducing the kinetic impact energy and once the impact energy has been completely converted into frictional heat the stop (6) comes to a stop and the dividing position is set by specific movement of the stop (6).

2. A method according to Claim 1, characterised in that the stop (6) before the impact of the stock (5) is set in motion in the direction of transport (42) of the stock (5), the rate of travel being less than the speed of transport of the stock (5).

3. A method according to Claims 1 and 2,
characterised in that after the impact of the stock (5) and upon the reduction of the kinetic impact energy the stop (6) is moved counter to or in the direction of transport (42) with the roller table (3) running.

4. A method according to Claims 1 to 3, characterised in that in order to achieve compactness of the stock (5) supplied to the stop (6) in layers, small relative movements are produced between the individual pieces (a - e).

5. A device (1) for positioning elongate, bar-shaped stock (5) for production of exact lengths, consisting of a stop (6) which can be pivoted into the roller table (3) of a dividing installation, with a stop plate (13) which is provided with a damping element (7) and is connected in articulated manner to carriages (28) movable next to the roller table (3) in parallel by means of an electric motor (14),
characterised in that no locking means is provided for the movable carriage (28) and that the torque of the motor (14) is changeable.

6. A device according to Claim 5, characterised in that the damping element, which is designed as a shock-absorber (7), cooperates with a blister store.

7. A device according to Claims 5 and 6,
characterised in that the rollers (20) of the roller table (3) have a certain non-circularity.

## Revendications

1. Procédé pour positionner de la matière allongée (5), en forme de barre, pour la fabrication à longueur précise, dans lequel, individuellement ou par couches, la matière (5) est amenée, par l'intermédiaire d'un train de rouleaux (3), à une installation partielle et est déplacée contre une butée (6) pouvant pivoter dans le train de rouleaux (3) et déplacable en direction longitudinale du train de rouleaux (3) et, par un élément d'amortissement (7) relié à la butée (6), l'énergie de choc est transformée en chaleur de frottement et, après fixation de la position de clivage, une longueur prédéfinie de la matière (5) est coupée,
caractérisé en ce que la possibilité de déplacement de la butée (6), y compris l'élément d'amortissement (7) relié à celle-ci, est utilisée pour la transformation de l'énergie cinétique de choc et, après transformation complète de l'énergie de choc en chaleur de frottement, la butée (6) est arrêtée et la position de clivage est réglée par un déplacement visé de la butée (6).

2. Procédé selon la revendication 1,
caractérisé en ce que la butée (6) est mise en mouvement avant le choc de la matière (5) dans la direction de transport (42) de la matière (5), la vitesse de déplacement étant plus faible que la vitesse de transport de la matière (5).

3. Procédé selon les revendications 1 et 2,
caractérisé en ce que, après le choc de la matière (5) et lors de la transformation de l'énergie cinétique de choc, la butée (6) est déplacée à l'encontre ou dans la direction de transport (42) alors que le train de rouleaux (3) tourne.

4. Procédé selon les revendications 1 à 3,
caractérisé en ce que de petits mouvements relatifs entre les pièces individuelles (a-e) sont engendrés pour permettre la mise à fleur de la matière (5) amenée par couches sur la butée (6).

5. Dispositif (1) pour positionner de la matière allongée (5), en forme de barre, pour la fabrication à longueur précise, comportant une butée (6) pouvant pivoter dans le train de rouleaux (3) d'une installation partielle ayant une plaque de butée (13), qui est munie d'un élément d'amortissement (7) et est reliée, de façon articulée, à un chariot (28) déplacable à côté du train de rouleaux (3), parallèlement, au moyen d'un moteur électrique (14),
caractérisé en ce que, pour le chariot déplacable (28), aucun dispositif d'arrêt n'est prévu, et en ce que le couple du moteur (14) peut être modifié.

6. Procédé selon la revendication 5,
caractérisé en ce que l'élément d'amortissement, réalisé comme amortisseur de choc (7), coopère avec un réservoir de soufflage.

7. Dispositif selon les revendications 5 et 6,
caractérisé en ce que les rouleaux (20) du train de rouleaux (3) présentent une excentricité déterminée.
